(19) **Europäisches Patentamt**
**European Patent Office**
**Office européen des brevets**

(11) **EP 2 642 275 B1**

(12) **FASCICULE DE BREVET EUROPEEN**

(45) Date de publication et mention
de la délivrance du brevet:
**27.07.2016 Bulletin 2016/30**

(51) Int Cl.:
**G01N 3/30** *(2006.01)*      **G01N 3/48** *(2006.01)*
**E04F 15/22** *(2006.01)*

(21) Numéro de dépôt: **13305316.5**

(22) Date de dépôt: **18.03.2013**

(54) **Dispositif de mesure de l'indice de confort des sols sportifs intérieurs après impact d'une force sur le sol**

Messvorrichtung des Komfort-Indexes von Böden in Sporthallen nach dem Wirken einer Kraft auf den Boden

Device for measuring the comfort index of indoor sports surfaces after the impact of a force on the surface

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **22.03.2012 FR 1252588**

(43) Date de publication de la demande:
**25.09.2013 Bulletin 2013/39**

(73) Titulaires:
- **GERFLOR**
  **69100 Villeurbanne (FR)**
- **Sensix**
  **86000 Poitiers (FR)**
- **Centre National de la Recherche Scientifique (CNRS)**
  **75794 Paris Cedex 16 (FR)**
- **UNIVERSITE DE POITIERS**
  **86034 Poitiers Cedex (FR)**
- **Ecole Nationale Supérieure de Mécanique et d'Aérotechnique**
  **86960 Futuroscope (FR)**

(72) Inventeurs:
- **Benkhemis, Inès**
  **86000 POITIERS (FR)**
- **Lacouture, Patrick**
  **86000 POITIERS (FR)**
- **Rivat, Alain**
  **69170 LES SAUVAGES (FR)**

(74) Mandataire: **Cabinet Laurent & Charras**
**3 place de l'Hotel de Ville**
**CS 70203**
**42005 Saint-Etienne Cedex 1 (FR)**

(56) Documents cités:
**EP-A1- 2 390 649**     **WO-A1-03/056302**
**DE-A1- 3 918 195**     **US-A- 4 856 318**
**US-A- 5 390 535**

**Description**

L'invention se rattache au secteur technique des revêtements de sol et plus particulièrement des revêtements de sol utilisés dans des applications sportives ou de pratique d'exercices corporels tels que par exemple des salles et/ou lieux de remise en forme, de gymnastique, et similaires.

L'invention se rattache également au secteur technique des appareils et instruments susceptibles de mesurer la déformation des revêtements de sol après impact d'une force pouvant résulter de la pratique d'un sport et/ou d'une activité physique afin de définir des caractéristiques de structure des dits revêtements de sol pour répondre à des exigences de confort selon des normes.

Toute activité physique entraîne des chocs qui sont des agressions corporelles, notamment de l'appareil musculo-tendineux. Si la nonne européenne sur les Sols Sportifs (EN14904) prend bien en compte la réduction de force (sécurité), elle n'intègre pas la notion de contact avec le sol (confort d'impact) particulièrement importante pour les enfants de 2 à 11 ans. En effet, les évolutions des enfants de l'âge primaire, lors des récréations et des séances d'éducation physique, sont ponctuées de courses, de contacts et de jeux qui occasionnent des chutes plus ou moins contrôlées sur les coudes, les genoux, voire la tête. En conséquence, un sol doit être confortable en limitant les contraintes afin qu'il apporte à l'enfant des nouvelles protections lors de ses activités de motricité.

Lors d'activités régulières, ce qui est le cas des activités d'apprentissage, un sol sécuritaire est indispensable même si au quotidien, les risques ne sont pas perceptibles. C'est pourquoi il est indispensable de caractériser la sollicitation, la quantité de pratique, et aussi le confort recherché. La normalisation européenne prend en compte ces besoins de sécurisation et définit ainsi des niveaux selon la catégorie du sol, lesquels sont alors classés en catégories correspondant à des réductions de forces.

Il est nécessaire d'utiliser des appareils et instruments pour mesurer l'impact et la déformation de revêtements de sol pouvant être constitués d'un ensemble de couches permettant par leurs propriétés particulières respectives la pratique de telles activités, en particulier sans risques de blessures et/ou de commotions sur les membres en particulier

La fonction de confort d'un sol est liée au respect d'un ensemble de critères (amortissement, glissance, bruit, déformation verticale) auxquels on associe le confort d'impact. Cette dernière notion de confort d'impact est quantifiée par la contrainte subie par le coude ou le genou de l'enfant sur le sol. Plus cette contrainte est faible plus le sol est jugé confortable. Différentes études ont été menées à ce sujet et qui ont amené à la mise en oeuvre d'un dispositif permettant la mesure de l'indice de confort d'impact. A cet effet, le dispositif modélise le coude ou le genou sous forme d'un impacteur sphérique ou semi-sphérique réalisé sous forme d'une masse pleine. Cet impacteur sphérique a un diamètre 50 mm, une masse d'1,3 kg ou de 3,8 Kg et une hauteur de chute variable de 3 à 10 cm en fonction du poids de l'enfant. L'indice de confort est alors défini par la formule :

$$ICI = 100 \, (M \, \gamma \, max \, / \, SCmax)$$

dans laquelle : ICI est l'indice de confort d'impact,

: M est la masse de la sphère exprimée en kg
: $\gamma$ max est l'accélération maximale mesurée lors du choc exprimé en $ms^{-2}$ par l'accéléromètre
: SCmax est la surface du disque de la calotte de déformation maximale du sol exprimé en $mm^2$

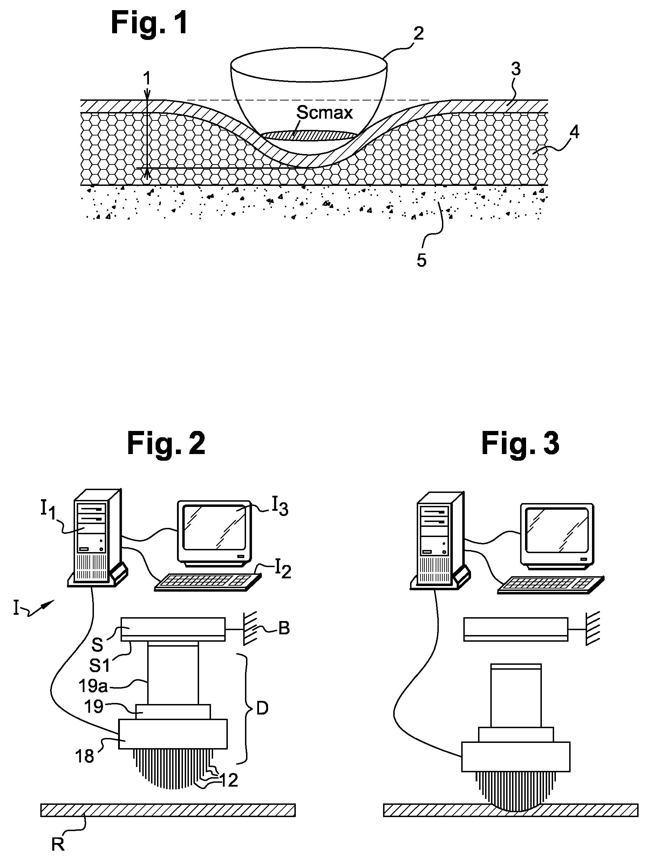

On a représenté à la figure 1 des dessins à titre schématique le disque de la calotte de déformation maximale, avec les références suivantes :

(1) pour l'enfoncement maximal, (2) pour l'impacteur sphérique de masse 1,3 kg, (3) pour la surface apparente du revêtement de sol, (4) pour la mousse sous-jacente à la dite surface apparente de sol, (5) la partie béton qui est réceptrice du revêtement de sol défini par (3) et (4).

Ainsi selon l'art antérieur de la figure 1, on connaît l'utilisation de moyen de mesure, sous forme de sphère ou impacteur sphérique (2), qui est associé à des éléments de suspension permettant leur tenue temporaire puis leur détachement par rapport à un support, pour créer verticalement une force et impact entraînant la déformation du sol sous-jacent (3) (4). Cependant et de manière limitée, ces moyens permettent une mesure de la pénétration de la sphère sur une zone unique de contact avec la partie correspondante du dit revêtement, comme représenté figure 1 avec la section SCmax. Cette mesure, bien qu'intéressante, reste néanmoins insuffisante pour pouvoir apprécier et mesurer l'impact réel sur une surface beaucoup plus étendue.

On connaît par le document US 4856318 un impacteur pour mesurer la dureté de surfaces synthétiques.

On connait par le document WO 03/056302 un dispositif pour mesurer les caractéristiques de densité et de résistance à la pénétration à partir d'une sonde de sol ou de neige à travers des couches de neige afin de prévenir des avalanches. Ce document relève d'une application différente et fonctionne à la manière d'un carottage.

On connait par le brevet DE 3918195 une machine à tester et mesurer une déformation du sol. Celle-ci est appliquée directement sur le matériau à tester. Cette machine effectue une mesure indirecte avec une force appliquée au centre et des capteurs excentrés. Il faut extrapoler à partir de déformations extérieures, celle engendrée au centre suite à l'application de la force. Cette technologie est seulement applicable à des matériaux homogènes.

La démarche du Demandeur a donc été de rechercher et de concevoir un dispositif de mesure optimisé permettant d'avoir une meilleure connaissance de l'impact au sol et de la déformation de celui-ci avec une mesure directe pour tout type de sols sportifs quelle que soit le degré d'homogénéité.

La solution apportée par le Demandeur répond à cet objectif.

Selon une première caractéristique de l'invention, le dispositif de mesure de l'indice de confort des sols sportifs intérieurs après contact d'un impacteur semi-sphérique sur le revêtement de sol, est remarquable qu'il comprend un bâti de configuration cylindrique présentant intérieurement une paroi support délimitant extérieurement et intérieurement deux zones de réception de composants, côté extérieur pour la réception d'un ensemble de moyens associés à des moyens de mesure sous forme de jauges de contraintes, les dits moyens après assemblage définissant une forme en demi-sphère constituant la zone d'impact avec le revêtement de sol, et côté intérieur le dit bâti formant une chambre intérieure recevant un accéléromètre et l'ensemble de la connectique associée aux différents moyens de mesure, ainsi que des moyens de jonction électriques avec une installation informatique susceptible de gérer, de mesurer et de comparer par rapport à une mesure théorique l'impact sur le revêtement de sol, et en ce que le bâti est intégré dans un support de protection l'enveloppant, avec la réception d'un couvercle obturant la chambre intérieure et permettant la fixation d'une platine coopérant avec la partie aimantée d'un support disposé en hauteur par rapport au plan horizontal du revêtement de sol, et en ce que les moyens sont agencés à leur base avec un bandeau extérieur en saillie formant talon sur une petite hauteur en définissant une zone d'appui entre deux moyens accolés successifs avec un espace d'écartement entre eux, et en ce que chaque moyen reçoit sur tout ou partie de sa périphérie à des jauges de contrainte mesurant l'impact avec le revêtement de sol sur la partie d'extrémité de chaque moyen d'extrémité, et en ce que l'espace est établi pour le passage des fils associés aux jauges de contrainte .

Ces caractéristiques et d'autres encore ressortiront bien de la suite de la description.

Pour fixer l'objet de l'invention illustré d'une manière non limitative aux figures des dessins où :

La figure 1 est une vue à caractère schématique illustrant selon l'art antérieur l'aspect d'une sphère sur un revêtement de sol et les zones de mesure,

La figure 2 est une vue à caractère schématique du dispositif selon l'invention associé à des moyens de mesure et de comparaison, et ce avant son impact sur le revêtement de sol,

La figure 3 est une vue complémentaire à la figure 1 représentant le dispositif en situation d'impact avec le revêtement de sol,

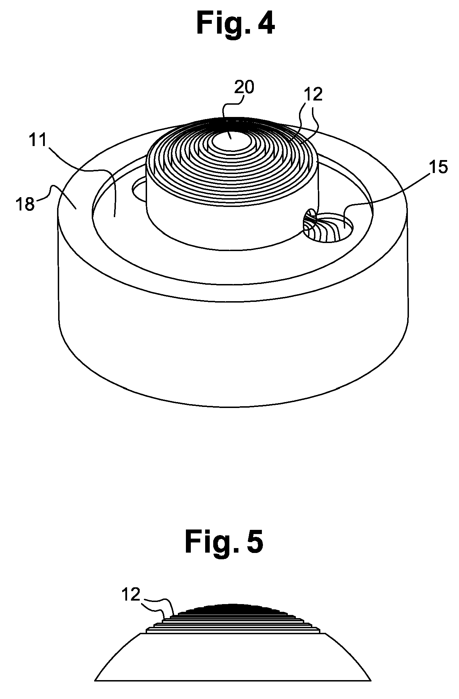

La figure 4 est une vue partielle en perspective illustrant la configuration du dispositif dans ses moyens principaux,

La figure 5 est une vue partielle de face illustrant la configuration du dispositif dans sa partie de contact et d'impact avec le revêtement de sol,

La figure 6 est une vue de dessous partielle illustrant la partie carter du dispositif recevant intérieurement un accéléromètre,

La figure 7 est une vue en coupe illustrant le dispositif de mesure selon l'invention,

La figure 8 est une vue à grande échelle du détail 'A' représenté figure 7,

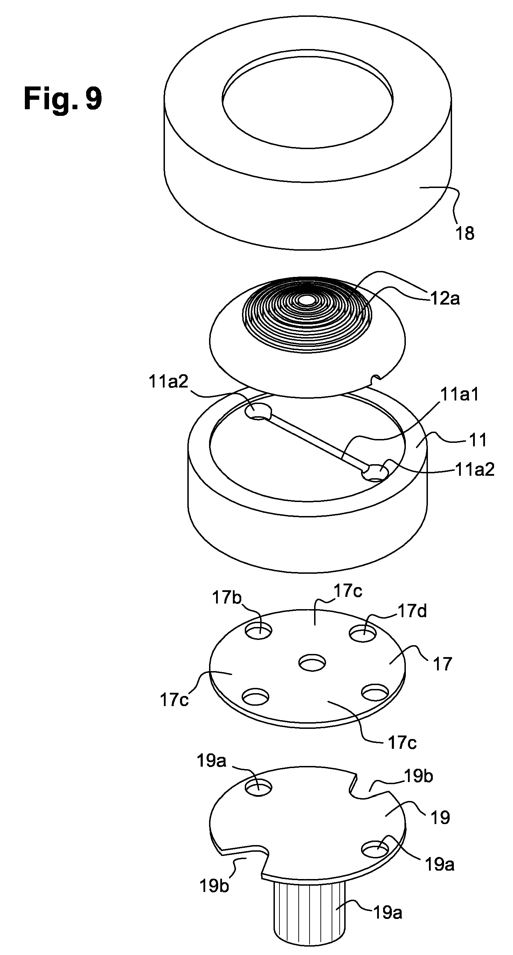

La figure 9 est une vue en perspective avant montage du dispositif selon l'invention,

La figure 10 est une vue partielle de dessous illustrant l'assemblage de différents composants du dispositif avec les fils électriques de câblage,

La figure 11 est une vue partielle représentant la base support des composants du dispositif,

La figure 12 est une vue en perspective illustrant un composant,

La figure 13 est une vue en variante du dispositif représenté figure 3.

Afin de rendre plus concret l'objet de l'invention, on le décrit maintenant d'une manière non limitative illustré aux figures des dessins.

Le revêtement de sol est référencé schématiquement par (R) et est constitué par une structure multicouches généralement utilisée dans le domaine des sols sportifs, et des revêtements de sol permettant des exercices corporels, de gymnastique ou similaires. Ce peut être aussi des revêtements de sol utilisés dans des salles de remise en forme, ou, mise à disposition de jeunes enfants. Ces revêtements de sol sont structurés pour offrir un certain confort, à la marche, à l'exercice, en permettant d'absorber aussi sans difficultés et sans blessures des zones de contact corporelles des personnes utilisatrices, par exemple lorsqu'elles sont déséquilibrées et tombent au sol. Ces revêtements de sol ont donc une capacité d'absorption des chocs et de déformation ponctuelle et temporaire avec remise en état immédiate après suppression de l'impact.

Le dispositif de mesure selon l'invention est référencé par (D) et il est assujetti à un plan support (S) disposé en hauteur par rapport au plan horizontal du dit revêtement de sol. Ce plan support (S) est lui-même en position fixe par rapport à un plan de fixation fixe (B). Le plan support (S) présente une partie aimantée (S1) qui est susceptible de coopérer avec le dispositif (D). Ce dernier est en jonction avec une installation informatisée (I) comprenant une unité centrale (I1) avec clavier (I2) et écran (I3) permettant l'enregistrement, la lecture et l'étude des données de mesure résultant de l'impact du dispositif (D) sur le revêtement de sol (R).

Le dispositif (D) comprend un bâti (11), de préférence de configuration cylindrique, et présentant intérieurement une paroi support (11a) délimitant extérieurement et intérieurement deux zones particulières de réception de composants. Ce bâti comprend ainsi côté extérieur une partie évidée centrale (11b) dans laquelle est disposé un ensemble de moyens (12) associés eux-mêmes à des moyens de mesure (13) du type jauges de précontraintes. Ces moyens (12) assemblés par rapport au bâti définissent une forme en demi-sphère qui constitue la zone d'impact avec le revêtement de sol. Côté intérieur, le bâti (11) forme une chambre intérieure (11c) susceptible de recevoir un accéléromètre (14), et l'ensemble de la connectique, des fils et câbles électriques (15), qui sont associés à chaque moyen de mesure (13), ainsi que des cordons de jonction (16) électriques en liaison avec l'installation informatique (I). Un couvercle (17) constitué par une plaque supérieure obture la chambre intérieure (11c). Le dit bâti est intégré lui-même dans un support de protection (18), de configuration cylindrique l'enveloppant, le couvercle (17) reçoit à fixation une platine (19) recevant un manchon de liaison (19a) pouvant coopérer avec la partie aimantée (S1) du support (S).

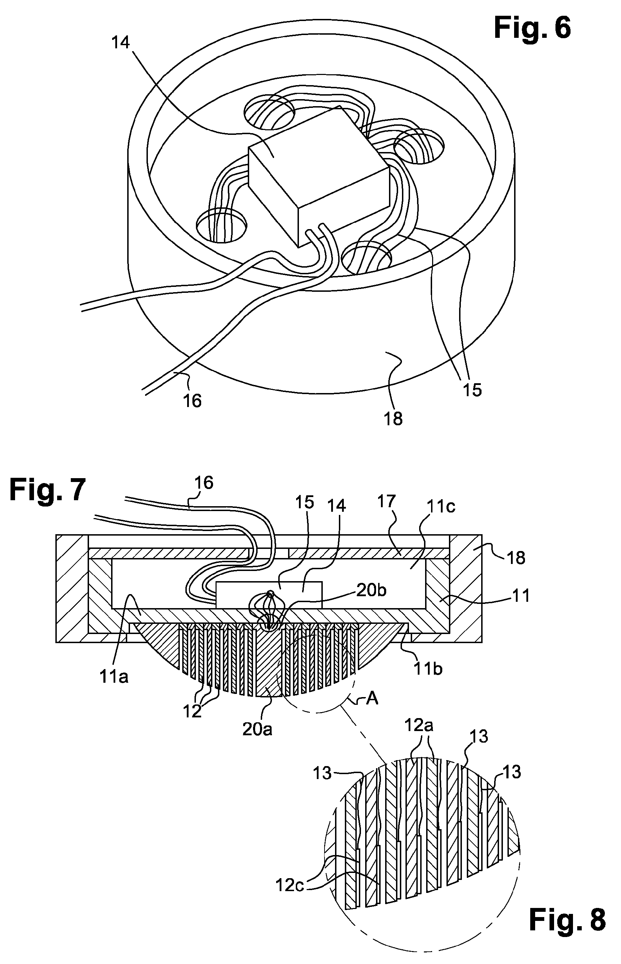

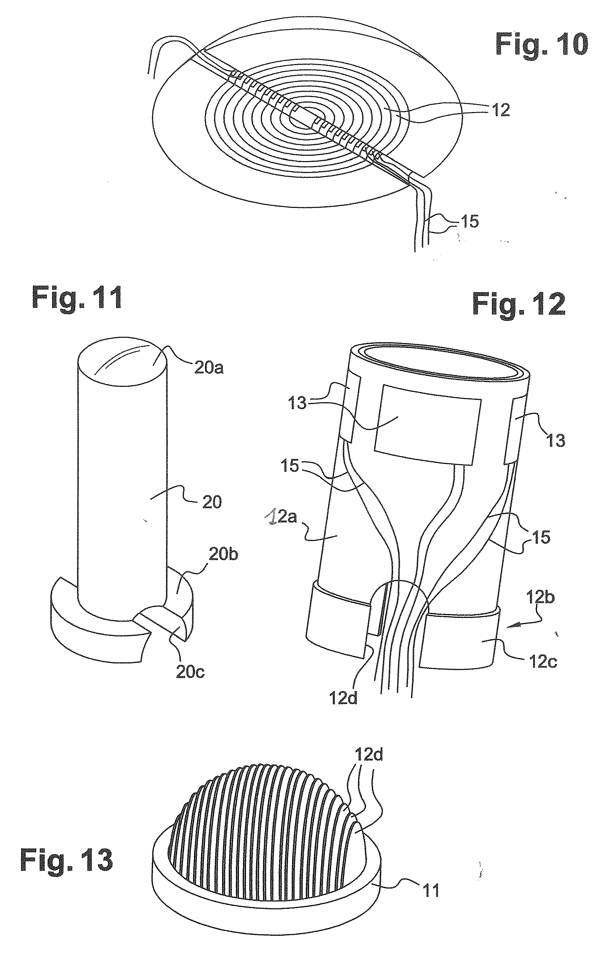

Le dispositif (D) est avantageusement conçu pour ces moyens (12) avec un ensemble de cylindres (12a) concentriques comme représenté figures 7, 8 et 13 notamment qui sont susceptibles de s'assembler autour d'un moyeu (20) solidaire du plan support (11a) précité. Dans la mise en oeuvre illustrée sur ces figures, le moyeu (20) représenté figure 11 comprend une colonne (20a) de grande hauteur correspondant à la hauteur affleurante maximum du moyen (12) de plus grande hauteur. Ce moyeu (20) présente à sa base une collerette périphérique (20b) munie d'une échancrure (20c) traversante diamétralement. Les moyens (12) ont une configuration en cylindre (12a) comme représenté figure 12 avec une succession de hauteurs progressives pour constituer la forme finale extérieure en demi-sphère. Chaque cylindre (12a) présente à sa base (12b) un bandeau extérieur en saillie sur une petite hauteur formant talon permettant de définir une zone d'appui (12c) entre deux cylindres accolés successifs avec un espace (e) d'écartement entre eux. Chaque cylindre reçoit sur tout ou partie de sa périphérie des jauges de contraintes (13) qui sont susceptibles de mesurer un impact sur la partie d'extrémité de chaque cylindre.

Les dites jauges de contraintes, associées à des fils conducteurs, transmettent les informations à l'ordinateur à travers un boitier de conditionnement électronique. Chaque cylindre présente au niveau de sa base une échancrure (12d) traversante diamétralement devant être en prolongement de l'échancrure (20c) formée sur la base du moyeu (20). Ainsi, tous les fils conducteurs sont dirigés de la chambre intérieure (11b) où ils seront regroupés en un seul câble lequel est ensuite susceptible de transmettre les informations au système informatique. Les extrémités des cylindres qui sont par ailleurs métalliques sont sensibles au contact du dispositif avec chaque partie de revêtement de sol au niveau de l'empreinte formée et résultant de l'impact lors de la chute du dispositif sur le dit revêtement.

La paroi support (11a) présente un rainurage diamétral (11a1) permettant le passage de composants de connexion, deux trous (11a2) leur permettant d'accéder dans la chambre intérieure (11b). Le couvercle (17) présente des trous (17d) de passage des composants de connectique et de cordons de jonction (16). Il présente aussi des zones de fixation (17b) avec la platine (19). Celle-ci présente des échancrures (19b) par le passage des composants de connexion, et des trous de fixation (19a) avec le couvercle (17). Le couvercle présente des trous (17c) pour la fixation sur le bâti (11).

Cette disposition particulière avec une pluralité de cylindres concentriques permet d'affiner et d'élargir l'importance de la zone d'impact du dispositif sur le revêtement avec une plage de mesure beaucoup plus conséquente et précise. En effet, si un ou plusieurs cylindres n'est pas ou ne sont pas en contact avec le revêtement de sol, il n'y a pas de déclenchement de signal électrique. La configuration en sphère qui est donnée par le positionnement progressif des différents cylindres et aussi de la partie d'extrémité du moyeu permet une mesure précise.

On a illustré une variante de réalisation figure 13 dans laquelle les moyens de mesure (12) sont réalisés sous forme de lamelles (12d) semi-discales de dimensions progressives donnant une configuration en demi-sphère, les dites lamelles étant disposées parallèles et verticales. Comme précédemment ces lamelles présentent un talon qui permet de créer des intervalles lors de l'appui et contact des lamelles successives tout en permettant le passage des fils associés aux jauges de contraintes.

Le dispositif de mesure selon l'invention est particulièrement performant car il permet à l'inverse de l'impacteur sphérique illustré figure 1 de l'art antérieur, dont la seule instrumentation embarquée est un accéléromètre 1D permettant de mesurer une surface d'impact théorique, de mesurer avec une plus grande précision la surface réelle (expérimentale) d'impact de la sphère grâce à la détection des contacts avec le sol à travers la variation des signaux générés par les jauges de contraintes fixées sur les différents cylindres.

Par rapport au document DE 3918195, la structure totalement différente du dispositif selon l'invention en combinaison avec sa mise en oeuvre avec une force connue grâce à la hauteur de chute, une masse de la machine prédéfinie, et un accéléromètre 3D incorporé dans le corps de la matrice, on obtient des résultats et performances de mesure de très grande qualité quelle que soit la structure du sol et son degré d'homogénéité.

Le dispositif peut être utilisé selon deux modes distincts :

### 1- Mode ON-OFF :

Si le signal est constant, le cylindre (12) concerné n'a pas touché le sol lors du test de chute. Si le signal varie, le cylindre est en contact avec le sol lors du test de chute. L'ensemble des signaux recueillis renseigne sur les dimensions du cratère lors de la déformation du sol. Cette déformation est considérée comme expérimentale. L'enfoncement maximal est alors calculé à partir du résultat issu de la composante verticale de l'accéléromètre fixé à l'intérieur du dispositif. La valeur de cet enfoncement permet de calculer les dimensions théoriques du cratère. Les résultats issus des composantes transverses de l'accéléromètre servent à valider la verticalité de la chute, donc la validité du test.

### 2- Mode capteur :

Tous les cylindres du dispositif sont préalablement étalonnés avant d'être montés dans le bâti (11). Les signaux issus des ces cylindres lors des tests de chute sont traduits en force à travers l'interface informatique permettant de procéder à des mesures avec le tracé d'un graphe de répartition des contraintes de la zone de déformation.

Le dispositif selon l'invention offre donc l'avantage d'apporter une mesure beaucoup plus précise avec une plage de mesures beaucoup plus étendue sur toute la zone de contact de la partie sphère avec la partie de revêtement de sol correspondante. Cela permet alors de concevoir des revêtements de sol avec des propriétés de structure les plus adaptées pour répondre aux besoins.

### Revendications

**1.** Dispositif de mesure de l'indice de confort des sols sportifs intérieurs après contact d'un impacteur semi-sphérique sur le revêtement de sol, comprenant un bâti (11) de configuration cylindrique présentant intérieurement une paroi support (11a) délimitant extérieurement et intérieurement deux zones de réception de composants, côté extérieur, une partie évidée centrale (11b) recevant un ensemble de moyens (12) associés à des capteurs (13) sous forme de jauges de contraintes, les dits moyens (12) définissant après assemblage une forme en demi-sphère constituant la zone d'impact avec le revêtement de sol, et côté intérieur le dit bâti (11) formant une chambre intérieure (11c) recevant un accéléromètre (14) et l'ensemble de la connectique associée aux différents capteurs (13), ainsi que des moyens de jonction électriques avec une installation informatique (I) susceptible de gérer, de mesurer et de comparer par rapport à une mesure théorique l'impact sur le revêtement de sol, et le bâti étant intégré dans un support de protection (18) l'enveloppant, avec la réception d'un couvercle (17) obturant la chambre intérieure (11c) et permettant la fixation d'une platine (19) coopérant avec la partie aimantée (S1) d'un support (S) disposé en hauteur par rapport au plan horizontal du revêtement de sol, et les moyens (12) étant agencées à leur base (12b) avec un bandeau extérieur en saillie formant talon sur une petite hauteur en définissant une zone d'appui entre deux moyens (12) accolés successifs avec un espace (e) d'écartement entre eux, et chaque moyen (12) recevant sur tout ou partie de sa périphérie des jauges de contrainte (13) mesurant l'impact avec le revêtement de sol sur la partie d'extrémité de chaque moyen (12), et l'espace (e) étant établi pour le passage des fils associés aux jauges de contrainte (13).

**2.** Dispositif selon la revendication 1, **caractérisé en ce que** les moyens (12) sont établis sous forme d'un ensemble de cylindres (12a) concentriques assemblés autour d'un moyeu (20) solidaire du plan support (11a).

**3.** Dispositif selon la revendication 2, **caractérisé en ce que** le moyeu (20) comprend une colonne (20a) de grande hauteur correspondant à la hauteur affleurante maximum du cylindre de plus grande hauteur, l'ensemble des cylindres définissant le moyen (12) donnant une configuration semi-sphérique par des hauteurs successives progressives en créant une configuration curviligne continue semi-sphérique.

**4.** Dispositif selon la revendication 2, **caractérisé en ce que** chaque cylindre présente au niveau de sa base une échancrure (12d) traversante diamétralement en prolongement d'une échancrure (20c) formée sur la base du moyeu pour permettre le positionnement et guidage des fils conducteurs en provenance des jauges de contraintes (13) dans la chambre intérieure (11b) vers l'accéléromètre (14).

**5.** Dispositif selon la revendication 4, **caractérisé en ce que** la paroi support (11a) présente un rainurage diamétral (11a1) pour le passage des composants de connexion, deux trous (11a2) leur permettant d'accéder dans la chambre intérieure (11b), et **en ce que** le couvercle (17) présente des trous (17d) de passage des composants de connectique et des cordons de jonction (16), le dit couvercle présentant des zones de fixation (17b) avec la platine (19).

6. Dispositif selon la revendication 1, **caractérisé en ce que** les dits moyens (12) sont établis sous forme de lamelles (12d) semi-discales, de dimensions progressives définissant une configuration en demi-sphère, les dites lamelles étant disposées verticales et parallèles les unes aux autres, et présentant un talon définissant des intervalles d'appui et de contact des dites lamelles successives tout en permettant le passage des fils associés aux jauges de contraintes (13).

**Patentansprüche**

1. Vorrichtung zur Messung des Komfortindexes von Indoor-Sportböden nach Aufprall eines halbkugelförmigen Schlagkörpers auf den Bodenbelag mit einem zylinderförmigen Tragwerk (11), welches innenseitig eine Tragwand (11a) aufweist, die außenseitig und innenseitig zwei Bereiche zur Aufnahme von Komponenten abgrenzt, außenseitig ein zentraler, ausgesparter Teil (11b) zur Aufnahme von sämtlichen Mitteln (12), die den Sensoren (13) in Form von Dehnungsmessern zugeordnet sind, wobei diese Mittel (12) nach dem Zusammenbau eine halbkugelförmige Konfiguration definieren, welche den Aufprallbereich auf den Bodenbelag darstellt, und wobei innenseitig das Tragwerk (11) eine innere Kammer (11c) bildet, in der ein Beschleunigungsmesser (14) und die gesamte, den einzelnen Sensoren (13) zugeordnete Anschlusstechnik sowie elektrische Verbindungsmittel zum Anschluss an eine Datenverarbeitungsanlage (I) untergebracht sind, welche den Aufprall auf den Bodenbelag bezogen auf einen theoretischen Wert verwalten, messen und vergleichen kann, und wobei das Tragwerk in eine es umhüllende Schutzvorrichtung (18) integriert ist, mit Aufnahme eines die innere Kammer (11c) verschließenden Deckels (17), an dem eine Platte (19) befestigt werden kann, die mit dem magnetisierten Teil (S1) eines bezogen auf die Horizontalebene des Bodenbelags oben angeordneten Trägers (S) zusammenwirkt, und wobei die Mittel (12) an ihrer Basis (12b) mit einer vorstehenden äußeren Blende angeordnet sind, welche über eine geringe Höhe einen Absatz bildet und dabei zwischen zwei aufeinanderfolgenden, angrenzenden Mitteln (12) mit einem dazwischen liegenden Abstandsbereich (e) einen Auflagebereich definiert und jedes Mittel (12) über seinen Umfang vollständig oder teilweise Dehnungsmesser (13) aufnimmt, die am Endabschnitt von jedem Mittel (12) den Aufprall auf den Bodenbelag messen, wobei der Abstand (e) der Durchführung der den Dehnungsmessern (13) entsprechenden Drähten dient.

2. Vorrichtung nach Anspruch 1, **dadurch gekennzeichnet, dass** die Mittel (12) in Form einer Vielzahl von konzentrischen Zylindern (12a) ausgebildet sind, die rund um eine mit der Trägerplatte (11a) verbundenen Nabe (20) montiert sind.

3. Vorrichtung nach Anspruch 2, **dadurch gekennzeichnet, dass** die Nabe (20) eine hohe Säule (20a) umfasst, deren Höhe bündig mit der maximalen Höhe des höchsten Zylinders übereinstimmt, wobei die Gesamtheit aller Zylinder das Mittel (12) definieren, welches durch aufeinanderfolgende, sukzessiv zunehmende Höhen zur Ausbildung einer halbkugelförmigen Konfiguration führt und dabei eine durchgehend gewölbte, halbkugelförmige Konfiguration schafft.

4. Vorrichtung nach Anspruch 2, **dadurch gekennzeichnet, dass** jeder Zylinder an seiner Basis in Verlängerung einer an der Basis der Nabe ausgebildeten Aussparung (20c) eine diametral durchgehende Aussparung (12d) zum Positionieren und Verlegen der spannungsführenden Drähte von den Dehnungsmessern (13) in der inneren Kammer (11b) zum Beschleunigungsmesser (14) aufweist.

5. Vorrichtung nach Anspruch 4, **dadurch gekennzeichnet, dass** die Tragwand (11a) zur Durchführung der Anschlusskomponenten eine diametrale Nut (11a1) aufweist, die diesen Anschlusskomponenten über zwei Löcher (11a2) Zugang zu der inneren Kammer (11b) gewährt, und dass der Deckel (17) zur Durchführung der Komponenten der Anschlusstechnik und der Verbindungsleitungen (16) Löcher (17d) aufweist, wobei der Deckel Befestigungsbereiche (17b) zur Befestigung an der Platte (19) umfasst.

6. Vorrichtung nach Anspruch 1, **dadurch gekennzeichnet, dass** die Mittel (12) als halbscheibenförmige Lamellen (12d) mit sukzessiv zunehmenden Abmessungen ausgebildet sind, die eine halbkugelförmige Konfiguration definieren, wobei die Lamellen senkrecht und parallel zueinander angeordnet sind und einen Absatz aufweisen, der Auflage- und Berührungsintervalle der aufeinanderfolgenden Lamellen definiert und gleichzeitig die Durchführung der den Dehnungsmessern (13) zugeordneten Drähte ermöglicht.

**Claims**

1. A device for measuring the comfort index of indoor sports floors after contact with a semi-spherical impactor on the floor covering, comprising a frame (11) of cylindrical shape internally having a support wall (11a) delimiting externally and internally two components receiving areas, on the external side, a central recessed portion (11b) receiving a set of means (12) associated with sensors (13) in the form of strain gauges, said means (12) defining after assembly a hemisphere forming the impact area with the floor, and on the internal side, said frame (11) forming an inner chamber (11c) receiving an accelerometer (14) and all the connections associated with the sensors (13), and electrical connection means with a computing facility (I) able to manage, measure and compare the impact on the floor covering with respect to a theoretical measure, and the frame being integrated into a protective support (18) wrapping it, with the reception of a lid (17) sealing the inner chamber (11c) and enabling to attach a plate (19) cooperating with the magnetized part (S1) of a support (S) arranged in height with respect to the horizontal plane of the floor covering, and the means (12) being provided at their base (12b) with an projecting outer strip forming a heel on a small height by defining a bearing zone between two successive joined means (12) having a separation space (e) between them, and each means (12) receiving strain gauges (13) in all or part of its periphery, measuring the impact with the floor covering on the end portion of each means (12), and the space (e) being established for the passage of the wires associated with the strain gauges (13).

2. The device according to claim 1, **characterized in that** the means (12) are arranged in the form of a set of cylinders (12a) concentrically assembled around a hub (20) integral with the support plane (11a).

3. The device according to claim 2, **characterized in that** the hub (20) comprises a column (20a) of large height corresponding to the maximum flush height of the largest cylinder, all the cylinders defining the means (12) forming a semi-spherical configuration through progressive successive heights resulting in a continuous curvilinear semispherical configuration.

4. The device according to claim 2, **characterized in that** each cylinder has at its base a notch (12d) diametrically therethrough in the extension of a notch (20c) formed on the base of the hub to allow the positioning and guiding of the conductive wires from the strain gauges (13) inside the inner chamber (11b) to the accelerometer (14).

5. The device according to claim 4, **characterized in that** the support wall (11a) comprises a diametrical groove (11a1) for the passage of connection components, two holes (11a2) for their access into the inner chamber (11b), and **in that** the lid (17) has holes (17d) for the passage of connection components and fixing cords (16), said lid having fixing zones (17b) with the plate (19).

6. The device according to claim 1, **characterized in that** said means (12) are arranged in the form of semi-discal strips (12d) having progressive dimensions defining a hemispherical configuration, said strips being arranged vertical and parallel to each other, and having a heel defining bearing and contact intervals of said successive strips while allowing the passage of the wires associated with the strain gauges (13).

# Fig. 1

Scmax

1

2

3

4

5

# Fig. 2

$I_1$

$I_3$

$I_2$

$I$

S
S1
19a
19
18

B

D

12

R

# Fig. 3

# Fig. 4

# Fig. 5

**Fig. 6**

14

16

15

18

**Fig. 7**

16    15   14   17   11c

18

20b

11

11a

12

20a

11b

A

12a   13

13

13

12c

**Fig. 8**

**Fig. 9**

Fig. 10

12

15

Fig. 11

20a

20

20b

20c

Fig. 12

13

15

12a

13

15

12b

12c

12d

Fig. 13

12d

11

## RÉFÉRENCES CITÉES DANS LA DESCRIPTION

**Documents brevets cités dans la description**

- US 4856318 A
- WO 03056302 A
- DE 3918195